Europäisches Patentamt

European Patent Office

Office européen des brevets

(11) Veröffentlichungsnummer: **0 275 447**
**A1**

(12) **EUROPÄISCHE PATENTANMELDUNG**

(21) Anmeldenummer: **87118085.7**

(22) Anmeldetag: **07.12.87**

(51) Int. Cl.⁴: **G11B 5/66**

(30) Priorität: **19.12.86 DE 3643609**

(43) Veröffentlichungstag der Anmeldung:
**27.07.88 Patentblatt 88/30**

(84) Benannte Vertragsstaaten:
**AT CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Rupp, Günter, Dr., Dipl.-Phys.**
**Weiherackerweg 24**
**D-8525 Rathsberg(DE)**

(54) **Magnetisch anisotropes Aufzeichnungsmedium.**

(57) Das magnetisch anisotrope Aufzeichnungsmedium (2) enthält ein plattenförmiges Substrat (3) aus nicht-magnetischem Material, auf dessen Flachseite (4) eine dünne Unterschicht (8) aus Si, Ge oder Ti und darauf eine Co-haltige Legierung mit senkrechter magnetischer Anisotropie aufgebracht sind. Dieses Aufzeichnungsmedium soll eine große Signalhöhe gewährleisten, ohne daß es einer besonderen weichmagnetischen Unterlage bedarf. Hierzu ist erfindungsgemäß eine sandwichartige Mehrschichtstruktur (7) vorgesehen, in der mindestens drei Speicherschichten (10 bis 13) aus der Co-haltigen Legierung mit jeweiliger Dicke ($d_s$) von höchstens 100 nm jeweils durch eine vergleichsweise dünnere Zwischenschicht (15 bis 17) aus dem Si und/oder Ge und/oder Ti getrennt sind. Das Aufzeichnungsmedium wird vorteilhaft für Platten von Datenspeichern mit senkrechter (vertikaler) Magnetisierung vorgesehen.

FIG 1

EP 0 275 447 A1

## Magnetisch anisotropes Aufzeichnungsmedium

Die Erfindung bezieht sich auf ein magnetisch anisotropes Aufzeichnungsmedium zur senkrechten (vertikalen) Magnetisierung mit einem plattenförmigen Substrat aus nicht-magnetischem Material, das auf mindestens einer Flachseite mit einer Unterschicht versehen ist, deren Material zumindest als Hauptkomponente Silizium und/oder Germanium und/oder Titan enthält und auf der - schichtförmig eine Kobalt (Co) enthaltende Legierung aufgebracht ist, die eine Achse der leichten Magnetisierung aufweist, die zumindest weitgehend in Normalenrichtung bezüglich der Flachseite des Substrates liegt. Ein derartiges Aufzeichnungsmedium geht aus der Veröffentlichung "IEEE Trans. Magn.", vol. MAG-21, no. 5, Sept. 85, Seiten 1426 bis 1428 hervor.

Das Prinzip der senkrechten Magnetisierung zur Speicherung von Informationen in entsprechenden Aufzeichnungsmedien ist allgemein bekannt (vgl. z.B. "IEEE Trans.Magn.", vol. MAG-16, no. 1, Jan. 80, Seiten 71 bis 76, oder vol. MAG-20, no. 5, Sept. 84, Seiten 657 bis 662 und 675 und 680). Die für dieses vielfach auch als vertikale Magnetisierung bezeichnete Prinzip vorgesehenen Aufzeichnungsmedien können z.B. in Form von starren Magnetspeicherplatten vorliegen. Ein solches Aufzeichnungsmedium weist eine entsprechend zu magnetisierende Aufzeichnungsschicht vorbestimmter Dicke aus einem Material mit senkrechter magneto-kristalliner Anisotropie auf, wobei die Achse der sogenannten leichten Magnetisierung dieser Schicht senkrecht zur Oberfläche des Aufzeichnungsmediums ausgerichtet ist. Bevorzugt wird als entsprechendes Speichermaterial CoCr (vgl. z.B. "IEEE Trans.Magn.", vol. MAG-14, no. 5, Sept. 78, Seiten 849 bis 851). Mittels besonderer Magnetköpfe können dann längs einer Spur die einzelnen Informationen als Bits in aufeinanderfolgenden Abschnitten durch entsprechende Magnetisierung der Aufzeichnungsschicht eingeschrieben werden. Die Bits haben dabei eine vorbestimmte, auch als Wellenlänge bezeichnete Ausdehnung in Längsrichtung der Spur. Diese Ausdehnung kann im Vergleich zu der Grenze, die bei einer Speicherung nach dem bekannten Prinzip der longitudinalen (horizontalen) Magnetisierung durch die Entmagnetisierung des Materials der Aufzeichnungsschicht gegeben ist, wesentlich kleiner sein. Somit läßt sich durch senkrechte Magnetisierung die Informationsdichte in den besonderen Aufzeichnungsmedien entsprechend vergrößern.

Für eine Aufzeichnung durch senkrechte Magnetisierung eines derartigen Mediums sind spezielle Magnetköpfe entwickelt worden, deren aus Magnetschenkeln gebildeter magnetischer Leitkörper insbesondere eine ringkopfähnliche Gestalt aufweisen kann (vgl. z.B. EP-A-0 012 910). Bei diesem Kopftyp besteht jedoch das Problem, in dem Aufzeichnungsmedium ein hinreichend starkes Signal zu erzeugen. Dies ist unter anderem durch das gewählte Material CoCr selbst bedingt. Bekanntlich wird nämlich die Signalhöhe durch die Größe der über den Entmagnetisierungsfaktor mit der magnetischen Remanenz gekoppelten Koerzitivfeldstärke des Materials bestimmt (vgl. z.B. "IEEE Trans. Magn.", vol. MAG-18, no. 2, März 82, Seiten 769 bis 771). Nun ist aber bei CoCr die Remanenz etwa gleich der Koerzitivfeldstärke, da bei diesem Material der Entmagnetisierungsfaktor nahe bei 1 liegt. Man kann zwar die Koerzitivfeldstärke in gewissen Grenzen erhöhen; diese muß aber für eindeutige Magnetisierungsverhältnisse stets kleiner als das von dem Magnetkopf zu erzeugende magnetische Schreibfeld sein. Der Größe dieses Kopffeldes sind jedoch wegen der angestrebten Miniaturisierung des Aufbaus des Kopfes entsprechend enge Grenzen gesetzt. So liegen im allgemeinen die maximalen vertikalen Kopffeldstärken unter 100 kA/m.

Man versucht nun das Problem zu geringer Kopffeldstärken z.B. dadurch zu lösen, daß zu einem Kopftyp übergegangen wird, der nur noch einen einzigen Magnetpol zum Schreiben besitzt (vgl. z.B. "IEEE Trans.Magn.", vol. MAG-18, no. 6, Nov. 82, Seiten 1170 bis 1172 oder EP-A-0 071 489). Das Schreibfeld eines solchen auch als Einzelpol-Kopf bezeichneten Magnetkopfes läßt sich annähernd auch durch besondere Maßnahmen hinsichtlich der Bevorzugung eines der beiden Magnetschenkel eines Magnetkopfes mit ringkopfähnlicher Gestalt erreichen (vgl. z.B. EP-A-0 166 818). Bei den genannten Kopftypen besteht jedoch die Schwierigkeit der Rückführung des magnetischen Flusses. Man sieht sich deshalb im allgemeinen gezwungen, unter der Aufzeichnungsschicht aus der CoCr-Legierung noch eine weichmagnetische Schicht wie z.B. aus "Permalloy" (Warenzeichen der "Bell Telephone Manufacturing Company") anzuordnen. Eine derartige Unterschicht führt zwar vorteilhaft beim Schreibvorgang zu einer Erhöhung der magnetischen Feldstärke am Ort des Aufzeichnungsmediums und damit zu der Signalhöhe. Jedoch sind mit dieser Maßnahme auch zusätzliche Probleme wie z.B. einer sogenannten "Peak-" oder "Bit-Shift" (vgl. z.B. IEEE Trans. Magn., vol. MAG-19, no. 5, Sept. 83, Seiten 1617 bis 1619) verbunden. Diese Probleme sind jedoch bisher nicht befriedigend gelöst.

Eine derartige weichmagnetische Unterschicht wird bei dem Aufzeichnungsmedium nicht vorgesehen, das aus der eingangs erwähnten Veröffentlichung bzw. der EP-A-0 158 338 bekannt ist. Dieses Medium enthält ein plattenförmiges Substrat aus einem nicht-magnetischen Material wie z.B. aus Aluminium. Auf diesem Substrat ist eine Unterschicht aus Silizium oder Germanium mit einer Dicke zwischen 1 nm und 1 μm aufgebracht. Diese Schicht dient als Unterlage für eine auf ihr aufzubringende CoCr-Schicht, die dabei eine Dicke in der Größenordnung von 500 nm oder mehr haben soll. Die Unterschicht hat insbesondere die Aufgabe, den Einbau einer senkrechten ma gnetischen Anisotropie in der auf ihr abzuscheidenden CoCr-Schicht zu fördern. Es wurde nämlich beobachtet, daß sich auf einer derartigen Unterschicht ein CoCr-Material bildet, dessen hexagonale Achse senkrecht zur Schichtebene steht, wobei die hexagonale Achse die leichte Magnetisierungsrichtung festlegt. Es zeigt sich jedoch, daß die magnetische Remanenz einer solchen Aufzeichnungsschicht und damit die zu erreichende Signalhöhe deutlich geringer sind als bei einer CoCr-Schicht mit weichmagnetischer Unterschicht.

Aufgabe der vorliegenden Erfindung ist es deshalb, das Aufzeichnungsmedium der eingangs genannten Art dahingehend auszugestalten, daß mit ihm eine größere Signalhöhe ermöglicht wird, ohne daß es einer besonderen weichmagnetischen Unterschicht bedarf.

Diese Aufgabe wird erfindungsgemäß dadurch gelöst, daß die Aufzeichnungsschicht eine sandwichartige Mehrschichtstruktur aufweist, in der mindestens drei Speicherschichten aus der Co-haltigen Legierung mit jeweiliger Dicke von höchstens 100 nm jeweils durch eine vergleichsweise dünnere Zwischenschicht aus dem Si-und/oder dem Ge-und/oder dem Ti-Material getrennt sind.

Die Erfindung geht dabei von der Erkenntnis aus, daß bei den maximalen magnetischen Feldern bekannter Magnetköpfe zur vertikalen Magnetisierung die Remanenz zunimmt, wenn man zu dünneren CoCr-Schichten unter etwa 100 nm übergeht. Dieser Effekt ist auf eine Ausbildung von immer kleineren Domänen bei abnehmender Schichtdicke zurückzuführen. Um nun den Vorteil der zunehmenden Remanenz bei abnehmender Schichtdicke ausnützen zu können, ist für die Aufzeichnungsschicht ein Mehrschichtenaufbau mit mindestens drei dünnen CoCr-Speicherschichten vorgesehen. Als Zwischenschichten in diesem Mehrschichtaufbau dienen vergleichsweise noch dünnere Si-oder Ge-oder Ti-Schichten, deren Aufgabe es ist, die Co-haltigen Speicherschichten magnetisch voneinander zu entkoppeln und außerdem bei der Schichtherstellung für eine gute Keimschicht zur Ausbildung der gewünschten magnetischen Anisotropie zu sorgen. Die mit diesen erfindungsgemäßen Maßnahmen zu erreichenden Vorteile sind insbesondere folgende:

1. Die Erhöhung der magnetischen Remanenz in den einzelnen Speicherschichten führt zu einem entsprechend höheren Lesesignal.

2. Kleinere Domänen verbessern das Signal-Rausch-Verhältnis der Aufzeichnungsschicht und sind für höhere Speicherdichten günstig.

3. Auf das magnetische Schreibfeld des verwendeten Magnetkopfes läßt sich die Koerzitivfeldstärke der Aufzeichnungsschicht einstellen, da bekanntlich im Bereich dünner Schichten diese Koerzitivfeldstärke mit der Schichtdicke zunimmt.

4. Außerdem ist eine Graduierung der Koerzitivfeldstärke möglich, so daß mit zunehmender Entfernung des Magnetkopfes entsprechend dem abnehmenden Schreibfeld auch die Koerzitivfeldstärke der Schichten abnimmt.

Mehrschichtstrukturen von magnetischen Aufzeichnungsmedium zur senkrechten Magnetisierung sind zwar aus "IEEE Trans. Magn.", vol. MAG-22, no. 5, Sept. 86, Seiten 328 bis 330 oder "Journ.Magn. and Magn.Mat.", vol. 54-57, 1986, Seiten 1683 und 1684 bekannt. Diese Veröffentlichungen setzen sich jedoch nicht mit den Problemen einer Signalhöhenverbesserung durch Steigerung der Remanenz auseinander.

Vorteilhafte Ausgestaltungen des Aufzeichnungsmediums nach der Erfindung gehen aus den Unteransprüchen hervor.

Zur weiteren Erläuterung der Erfindung wird nachfolgend auf die Zeichnung Bezug genommen, aus deren Figur 1 ein Ausschnitt aus einem erfindungsgemäßen Aufzeichnungsmedium ersichtlich ist. Figur 2 zeigt in einem Diagramm die Remanenz der Mehrfachschicht eines solchen Aufzeichnungsmediums, gemessen an Schichten verschiedener Dicke, als Funktion des maximalen angelegten Magnetfeldes. Dem Diagramm der Figur 3 ist die Remanenz einer Mehrschichtstruktur als Funktion der Schichtdicke einer Einzelschicht für verschiedene maximale Magnetkopffeldstärken zu entnehmen.

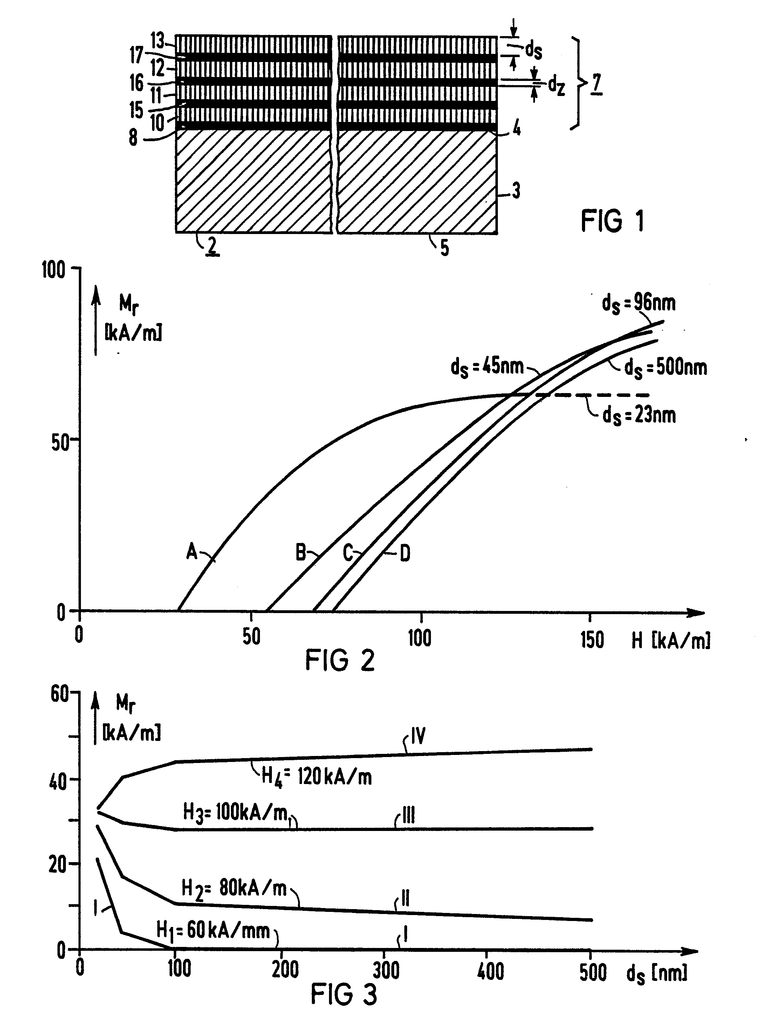

Bei dem in Figur 1 gezeigten Teil aus einem Aufzeichnungsmedium nach der Erfindung wird von bekannten plattenförmigen Medien ausgegangen, wie sie für nach dem Prinzip einer senkrechten (vertikalen) Magnetisierung arbeitenden Speicheranlagen vorzusehen sind. Das allgemein mit 2 bezeichnete Aufzeichnungsmedium enthält ein plattenförmiges Substrat, das z.B. einen allgemein üblichen 5,25 Zoll-Durchmesser haben kann. Das Substrat besteht aus einem nichtmagnetischen Material wie z.B. aus einem Kalk-Natron-Silikatglas oder aus Aluminium oder einer Aluminiumlegierung. Auf mindestens einer der beiden Flachseiten 4 bzw. 5 dieses Substrates 3 mit extremer Oberflächenebenheit und -glätte befindet sich gemäß der Erfindung eine Mehrschichtstruktur 7. Dabei ist noch zwischen dieser Struktur 7 und der Flachseite 4 in bekannter Weise eine dünne Unterschicht 8 aus Silizium (Si) oder Germanium (Ge) oder Titan (Ti) vorgesehen. Die die eigentliche Aufzeichnungsschicht des Aufzeichnungsmediums 2 bildende Mehrschichtstruktur 7 soll sich dabei gemäß der Erfindung aus mindestens drei Speicherschichten aus einer Co-haltigen Legierung wie insbesondere aus CoCr zusammensetzen, wobei benachbarte Speicherschichten jeweils durch eine dünnere Zwischenschicht beabstandet sind. Die Speicherschichten sollen in bekannter Weise eine Achse der leichten Magnetisierung besitzen, die zumindest weitgehend senkrecht auf der Flachseite 4 oder 5 des Substrates 3 steht. Als Material für die Zwischenschichten ist Si oder Ge oder Ti oder eine Legierung mit einem dieser Elemente vorgesehen. Gegebenenfalls noch erforderliche weitere Schichten wie z.B. zur Einebnung und zum Oberflächenschutz sind in der Figur nicht ausgeführt. Gemäß dem dargestellten Ausführungsbeispiel enthält die Mehrschichtstruktur 7 vier Speicherschichten 10 bis 13, die durch Zwischenschichten 15 bis 17 getrennt sind. Die Speicherschichten 10 bis 13 sollen jeweils eine Dicke $d_s$ von höchstens 100 nm aufweisen, während die jeweilige Dicke $d_z$ der Zwischenschichten 15 bis 17 unter 50 nm gewählt wird. Dementsprechend kann die dargestellte Mehrschichtstruktur 7 sandwichartig aus 50 nm dicken CoCr-Speicherschichten 10 bis 13 und 20 nm dicken Si-Zwischenschichten 15 bis 17 aufgebaut sein. Für die Speicherschichten und/oder die Zwischenschichten können jeweils auch unterschiedliche Materialien gewählt werden.

In dem Diagramm der Figur 2 ist die effektive magnetische Remanenz $M_r$ von vier einzelnen CoCr-Speicherschichten verschiedener Dicke $d_s$ in Abhängigkeit von der maximalen vertikalen Feldstärke eines äußeren Magnetfeldes H wiedergegeben. Dabei sind den mit A bis D bezeichneten Meßkurven Schichtdicken $d_s$ von 23 nm bzw. 45 nm bzw. 96 nm bzw. 500 nm zugrundegelegt. Wie aus dem Diagramm der Figur deutlich ersichtlich, kann beispielsweise bei einer Feldstärke von 50 kA/m, wie sie von einem Magnetkopf ohne weiteres zu erzeugen ist, lediglich mit einer 23 nm dicken Speicherschicht (Kurve A) ein hinreichend großer Wert der Remanenz $M_r$ und somit die Voraussetzung für eine ausreichende Signalhöhe erreicht werden. D.h., die Remanenz einer einzelnen dünnen Schicht ist höher als einer einzelnen, vergleichsweise dickeren Schicht unter der Voraussetzung, daß das maximal zur Verfügung stehende Magnetfeld begrenzt ist.

Da andererseits die Signalhöhe proportional dem magnetisierten Volumen ist, würde man bei Verwendung nur einer einzigen, vergleichsweise dünnen Speicherschicht aufgrund dieses Volumeneffektes Signalhöhe verlieren. Deshalb ist erfindungsgemäß eine Mehrschichtstruktur aus mehreren, magnetisch entkoppelten Schichten vorgesehen. Eine solche Mehrschichtstruktur mit 20 nm dicken Zwischenschichten aus Si ist dem in Figur 3 gezeigten Diagramm zugrundegelegt. Durch diese magnetisch "toten" Si-Schichten geht ein Bruchteil der Magnetisierung verloren. Unter Berücksichtigung dieses Volumeneffektes läßt sich dann die effektive magnetische Remanenz für bestimmte Kopffelder aus dem Diagramm ermitteln. In dem Diagramm sind auf der Abszisse die Dicke $d_s$ der einzelnen Speicherschichten aus CoCr der Mehrschichtstruktur und auf der Ordinate die effektive Remanenz $M_r$ aufgetragen. Für vier verschiedene maximale vertikale Feldstärken H eines schreibenden Magnetkopfes ergibt sich dann in der Mehrschichtstruktur jeweils ein spezieller Kurvenverlauf der Remanenz. Den einzelnen Kurven sind dabei Kopffeldstärken $H_1$ bis $H_4$ von 60 kA/m (Kurve I) bzw. 80 kA/m (Kurve II) bzw. 100 kA/m (Kurve III) bzw. 120 kA/m (Kurve IV) zugeordnet. Geht man nun von der Tatsache aus, daß mit bekannten Magnetköpfen zur vertikalen Magnetisierung im allgemeinen in der Mehrschichtstruktur nur Feldstärken unter 100 kA/m zu erreichen sind, so läßt sich aus dem Verlauf der Kurven I bis III des Diagramms deutlich ablesen, daß insbesondere bei Dicken $d_s$ der einzelnen Speicherschichten unter 100 nm mit abnehmender Schichtdicke eine deutliche Zunahme der effektiven Remanenz $M_r$ verbunden ist. Dieser Effekt wird bei der erfindungsgemäßen Mehrschichtstruktur ausgenutzt, d.h. die erfindungsgemäße Mehrschichtstruktur ist besonders für Magnetköpfe geeignet, mit denen nur ein verhältnismäßig schwaches Schreibfeld insbesondere unterhalb von 100 kA/m zu erzeugen ist.

**Ansprüche**

1. Magnetisch anisotropes Aufzeichnungsmedium zur senkrechten (vertikalen) Magnetisierung mit einem plattenförmigen Substrat aus nichtmagnetischem Material, das auf mindestens einer Flachseite mit einer dünnen Unterschicht versehen ist, deren Material zumindest als Hauptkomponente Silizium (Si) und/oder Germanium (Ge) und/oder Titen (Ti) enthält und auf der schichtförmig eine Kobalt (Co) enthaltende Legierung aufgebracht ist, die eine Achse der leichten Magnetisierung aufweist, die zumindest weitgehend in Normalenrichtung bezüglich der Flachseite des Substrates liegt, **dadurch gekennzeichnet,** daß eine sandwichartige Mehrschichtstruktur (7) vorgesehen ist, in der mindestens drei Speicherschichten (10 bis 13) aus der Co-haltigen Legierung mit jeweiliger Dicke ($d_s$)

von höchstens 100 nm jeweils durch eine vergleichsweise dünnere Zwischenschicht (15 bis 17) aus dem Si-und/oder Ge-und/oder dem Ti-Material getrennt sind.

2. Aufzeichnungsmedium nach Anspruch 1, **dadurch gekennzeichnet,** daß die Dicke ($d_z$) der Zwischenschichten (15 bis 17) jeweils unter 50 nm liegt.

3. Aufzeichnungsmedium nach Anspruch 1 oder 2, **dadurch gekennzeichnet,** daß die Speicherschichten (10 bis 13) aus einer CoCr-Legierung bestehen.

4. Aufzeichnungsmedium nach einem der Ansprüche 1 bis 3, **dadurch gekennzeichnet,** daß die Mehrschichtstruktur (7) einem senkrechten (vertikalen) Schreibfeld eines entsprechenden Magnetkopfes ausgesetzt ist, dessen maximale Feldstärke an der Oberfläche der Mehrschichtstruktur (7) unter 100 kA/m liegt.

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | JOURNAL OF MAGNETISM AND MAGNETIC MATERIALS, Band 54-57, 1986, Seiten 1683-1684, Elsevier Science Publishers B.V., NL; J. DESSERRE et al.: "(CrO,2CoO8-SiO2)n: A multilayered medium for vertical recording" * Page 1684, Zeilen 2.3,3 * | 1,3 | G 11 B 5/66 |
| | --- | | |
| D,Y | EP-A-0 158 338 (HITACHI MAXELL LTD) * Ansprüche 1,2; Seite 4, Zeilen 1-21 * | 1,2 | |
| A | | 3 | |
| | --- | | |
| Y | FR-A-1 358 761 (J. GREINER) * Zusammenfassung; Punkte 1,2,3 * | 1,2 | |
| | --- | | |
| A | PATENT ABSTRACTS OF JAPAN, Band 8, Nr. 113 (P-276)[1550], 26. Mai 1984; & JP-A-59 22 221 (MATSUSHITA DENKI SANGYO K.K.) 04-02-1984 | 1,3 | |
| | --- | | |
| A | EP-A-0 089 609 (MATSUSHITA ELECTRIC INDUSTRIAL CO., LTD) * Ansprüche 1,2 * | 1,3 | RECHERCHIERTE SACHGEBIETE (Int. Cl.4) |
| | --- | | G 11 B |
| P,X | EP-A-0 216 610 (INTERNATIONAL BUSINESS MACHINES) * Anspruch 1; Spalte 6, Zeilen 15-24 * | 1-3 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 18-03-1988 | DECANNIERE L.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)